# EUROPEAN PATENT APPLICATION

(11) **EP 4 660 215 A1**
(43) Date of publication of application: **10.12.2025**
(21) Application number: 24179925.3
(22) Date of filing: 04.06.2024
(51) Int. Cl.: C08G 59/18, C08G 59/22, C08G 59/40, C08G 59/68, C09J 163/00

(54) **ONE-COMPONENT THERMOSETTING EPOXY ADHESIVE WITH IMPROVED ADHESION AND IMPACT PEEL STRENGTH**

(71) Applicant: Sika Technology AG, 6340 Baar (CH)
(72) Inventor: LIN, Geng, Rochester Hills, 48309 (US); CHMIELEWSKI, Craig, Shelby Township, 48315 (US); CLIMIE, Michelle, Beverly Hills, 48025 (US)
(74) Representative: Sika Patent Attorneys

(57) **Abstract**

The present invention relates to a one-component thermosetting epoxy resin adhesive, comprising dicyandiamide and an epoxy adduct of an aliphatic polyamine having at least one secondary amine group as latent hardeners. The one-component thermosetting epoxy resin adhesives exhibits high values for T-peel strength, lap shear strength and impact peel strength when cured at low curing temperatures are needed, especially around 140 °C.

## Description

### Technical field

The present invention pertains to the field of one-component thermosetting epoxy resin adhesives and also to the use thereof particularly in vehicle construction.

### Prior art

Thermosetting, one-component epoxy resin adhesives have already been used for some considerable time as adhesives in body construction.

One important field of use of one-component thermosetting epoxy resin adhesives, accordingly, is in vehicle construction, where typically there are metal substrates such as steel sheets and aluminium present, particularly in the context of adhesive bonding. Following the application of the epoxy resin composition, the bodywork is heated in the CEC (cathodic electrocoating) oven, by means of which the thermosetting epoxy resin composition as well is cured.

Such structural adhesives must fulfil a variety of requirements including sufficiently high values for T-peel strength, lap shear strength and impact peel strength. These requirements are particularly difficult to meet when low curing temperatures are needed, especially around 140 °C.

### Summary of the invention

It is an object of the present invention, therefore, to provide a one-component thermosetting epoxy resin adhesives with sufficiently high values for T-peel strength, lap shear strength and impact peel strength when cured at low curing temperatures are needed, especially around 140 °C.

Surprisingly it has been found that this object can be achieved with the one-component thermosetting epoxy resin adhesive as defined in Claim 1.

Further aspects of the invention are subjects of further independent claims. Particularly preferred embodiments of the invention are subjects of the dependent claims.

### Certain embodiments of the invention

The present invention therefore relates to a one-component thermosetting epoxy resin adhesive, comprising
a) at least one epoxy resin **A** having on average more than one epoxide group per molecule, preferably a liquid epoxy resin, the fraction of the epoxy resin **A** being from 30 - 80 wt.-%, based on the total weight of the one-component thermosetting epoxy resin adhesive; and
b) at least one latent hardener **B1** for epoxy resins, wherein the latent hardener **B1** is dicyandiamide; and
c) at least one latent hardener **B2** for epoxy resins, wherein the latent hardener **B2** is an epoxy adduct of an aliphatic polyamine having at least one secondary amine group, wherein the amount of the at least one latent hardener **B2** is 2 - 8 wt.-%, more preferably 2.5 - 6 wt.-%, most preferably 2.75 - 5 wt.-%, based on the total weight of the epoxy resin **A** having on average more than one epoxide group per molecule; and
d) preferably at least one accelerator **C** for epoxy resins; and
e) at least at least one toughness improver **D**, the fraction of toughness improver **D** being from 5 - 40 wt.-%, based on the total weight of the one-component thermosetting epoxy resin adhesive.

It is preferred if the epoxy resin adhesive has a viscosity of 500 to 5000 Pas, 500 to 2000 Pas, 500 to 1500 Pas, preferably 500 to 1300 Pas at 25°C, the viscosity being determined oscillographically by means of a rheometer with heatable plate (MCR 301, AntonPaar) (slot 1000 µm, measuring plate diameter: 25 mm (plate/plate), deformation 0.01 at 5 Hz, temperature: 25°C).

The epoxy resin adhesive is one-component, meaning that the constituents of the epoxy resin adhesive, more particularly the epoxy resin and the hardener, are present in one component, without curing taking place at usual ambient temperature or room temperature. The one-component epoxy resin adhesive is therefore storage-stable. It can therefore be handled in this form, whereas with two-component systems the components cannot be mixed until immediately prior to use.

The curing of the one-component epoxy resin adhesive is accomplished by heating, typically at a temperature of more than 70°C, as in the range from 100 to 220°C, for example.

The prefix "poly" in expressions such as polyol or polyisocyanate denotes that the compound has two or more of the stated groups. A polyisocyanate, for example, is a compound having two or more isocyanate groups.

The expression "independently of one another" as used below means that in the same molecule, two or more identically denoted substituents may have identical or different meanings in accordance with the definition.

The dashed lines in the formulae in this document represent in each case the bond between the substituent in question and the associated remainder of the molecule.

Room temperature refers here to a temperature of 23°C, unless otherwise indicated.

The thermosetting one-component epoxy resin adhesive comprises at least one epoxy resin **A** having on average more than one epoxide group per molecule.

Preferably, the at least one epoxy resin **A** having on average more than one epoxide group per molecule is a liquid epoxy resin.

In contrast to the liquid epoxy resins **A,** solid epoxy resins having on average more than one epoxide group per molecule are solid at room temperature. The glass transition temperature of solid resins is above room temperature, meaning that they can be comminuted to pourable powders at room temperature.

Preferred liquid epoxy resins **A** having on average more than one epoxide group per molecule have the formula (II)

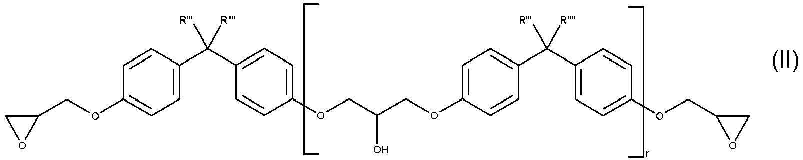

In this formula the substituents R‴ and Rʺʺ independently of one another are either H or CH₃. Moreover, the index r is from 0 to 1. Preferably r is less than 0.2.

The resins in question are therefore preferably diglycidyl ethers of bisphenol-A (DGEBA), of bisphenol-F, and of bisphenol-A/F. Liquid resins of these kinds are available for example as Araldite^{®} GY 250, Araldite^{®} PY 304, Araldite^{®} GY 282 (Huntsman) or D.E.R.^{™} 331 or D.E.R.^{™} 330 (Dow) or Epikote 828 (Hexion).

Additionally, suitable as liquid epoxy resins **A** are what are called novolaks. These resins have in particular the following formula: 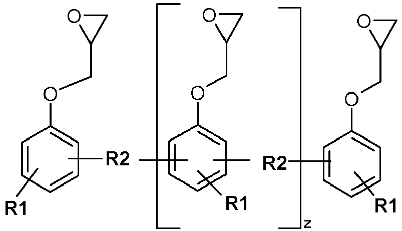 where **R2=** 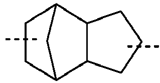 or CH₂, **R1** = H or methyl and z = 0 to 7.

More particularly these are phenol or cresol novolaks (**R2** = CH₂).

Epoxy resins of these kinds are available commercially under the trade name EPN or ECN and also Tactix^{®}556 from Huntsman, or among the D.E.N.^{™} product series from Dow Chemical.

The fraction of the epoxy resin **A** is from 30 - 80 wt.-%, based on the total weight of the one-component thermosetting epoxy resin adhesive, preferably from 40 - 70 wt.-%, most preferably 50 - 60 wt.-%.

Preferably, the thermosetting one-component epoxy resin adhesive further comprises at least one epoxy-bearing reactive diluent **G.** Such reactive diluents are known to those skilled in the art. Preferred examples of epoxy-bearing reactive diluents are:
- glycidyl ethers of monofunctional saturated or unsaturated, branched or unbranched, cyclic or open-chain C₄-C₃₀ alcohols, e.g. butanol glycidyl ether, hexanol glycidyl ether, 2-ethylhexanol glycidyl ether, allyl glycidyl ether, tetrahydrofurfuryl and furfuryl glycidyl ether, trimethoxysilyl glycidyl ether etc.;
- glycidyl ethers of difunctional saturated or unsaturated, branched or unbranched, cyclic or open-chain C₂-C₃₀ alcohols, for example ethylene glycol glycidyl ether, butanediol glycidyl ether, hexanediol glycidyl ether, octanediol glycidyl ether, cyclohexanedimethanol diglycidyl ether, neopentyl glycol diglycidyl ether etc.;
- glycidyl ethers of tri- or polyfunctional, saturated or unsaturated, branched or unbranched, cyclic or open-chain alcohols, such as epoxidized castor oil, epoxidized trimethylolpropane, epoxidized pentaerythritol or polyglycidyl ethers of aliphatic polyols such as sorbitol, glycerol or trimethylolpropane etc.;
- glycidyl ethers of phenol compounds and aniline compounds, such as phenyl glycidyl ether, cresyl glycidyl ether, p-tert-butylphenyl glycidyl ether, nonylphenol glycidyl ether, 3-n-pentadecenyl glycidyl ether (from cashewnutshell oil), N,N-diglycidylaniline, etc.;
- epoxidized amines such as N,N-diglycidylcyclohexylamine etc.;
- epoxidized mono- or dicarboxylic acids, such as glycidyl neodecanoate, glycidyl methacrylate, glycidyl benzoate, diglycidyl phthalate, tetrahydrophthalate and hexahydrophthalate, diglycidyl esters of dimeric fatty acids etc.;
- epoxidized di- or trifunctional, low to high molecular weight polyether polyols, such as polyethylene glycol diglycidyl ether, polypropylene glycol diglycidyl ether etc.

Particular preference is given to hexanediol diglycidyl ether, cresyl glycidyl ether, p-tert-butylphenyl glycidyl ether, polypropylene glycol diglycidyl ether and polyethylene glycol diglycidyl ether.

Preferably, the fraction of the epoxy-bearing reactive diluent G is from 0.5 - 10 wt.-%, preferably 0.75 - 5 wt.-%, more preferably 1 - 3 wt.-%, most preferably 1.25 - 2 wt.-%, based on the total weight of the one-component thermosetting epoxy resin adhesive.

The thermosetting one-component epoxy resin adhesive further comprises b) at least one latent hardener **B1** for epoxy resins, wherein the latent hardener **B1** is dicyandiamide. Latent hardeners are substantially inert at room temperature and are activated by elevated temperature, typically at temperatures of 70°C or more, thereby initiating the curing reaction.

Preferably, the amount of the at least one latent hardener **B1** is 5 - 20 wt.-%, preferably 6 - 8 wt.-%, more preferably 6.5 - 7.5 wt.-%, based on the total weight of the epoxy resin **A** having on average more than one epoxide group per molecule.

The fraction of the latent hardener **B1** is preferably 2.5 - 6 wt.-%, more preferably 3 - 4.5 wt.-%, more particularly 3.5 - 4 wt.-%, based on the total weight of the epoxy resin adhesive.

The thermosetting one-component epoxy resin adhesive further comprises c) at least one latent hardener **B2** for epoxy resins, wherein the latent hardener **B2** is an epoxy adduct of an aliphatic polyamine having at least one secondary amine group.

Reaction products of aliphatic polyamines with polyepoxides are suitable as amine-functional adducts, whereby amines with only one primary amine group may also be used in addition for the reaction product. Suitable amines with only one primary amine group are, in particular, benzylamine or 3-dimethylaminopropylamine (DMAPA).

The amines are preferably used in stoichiometric excess. A preferred ratio of the number of molecules with amine groups to the number of epoxy groups at the start of the reaction is 1.2 to 20, preferably 1.3 to 10, in particular 1.5 to 5. Unreacted, excess amines can be removed from the adduct obtained after the reaction, in particular by means of distillation.

Preferred aliphatic polyamines are polyamines with aliphatic or cycloaliphatic amine groups, in particular selected from the list consisting of 1,5-pentanediamine, 1,5-diamino-2-methylpentane (MPMD), 1,6-hexanediamine, 2,2(4),4-trimethyl-1, 6-hexanediamine (TMD), 1,2-diaminocyclohexane, 1,3-bis(aminomethyl)cyclohexane, 1,4-bis-(aminomethyl)cyclohexane, bis(4-aminocyclohexyl)methane, isophoronediamine (IPDA), 2(4)-Methyl-1,3-diaminocyclohexane, 1,3-bis(aminomethyl)benzene (MXDA), 3,6-dioxaoctane-1,8-diamine, 4,7-dioxadecane-1,10-diamine, 4 ,7-Dioxadecane-2,9-diamine, 4,9-Dioxadodecane-1,12-diamine, polyoxypropylenediamines with an average molecular weight Mn of 200 to 500 g/mol, polyoxypropylenetriamines with an average molecular weight Mn of 300 to 500 g/mol, diethylenetriamine (DETA), triethylenetetramine (TETA), tetraethylenepentamine (TEPA), pentaethylenehexamine (PEHA), dipropylene triamine (DPTA), N-(2-aminoethyl)-1,3-propanediamine (N3-amine), N,N'-bis( 3-aminopropyl)¬ethylenediamine (N4-amine) and bis(hexamethylene)triamine (BHMT). The term "average molecular weight" refers to the number-average molecular weight (Mn) of a mixture of oligomeric or polymeric molecules. Preferably as determined by gel permeation chromatography (GPC) using polystyrene as a standard. IPDA and MXDA are particularly preferred, IPDA is most preferred.

The polyepoxide is preferably a diepoxide. Particularly suitable polyepoxides are epoxy resins mentioned before as epoxy resin A having on average more than one epoxide group per molecule. Most preferably selected from the list consisting of diglycidyl ethers of bisphenol-A (DGEBA), of bisphenol-F, and of bisphenol-A/F, most preferably diglycidyl ethers of bisphenol-A (DGEBA).

Preferably, the latent hardener **B2** is an epoxy adduct of IPDA and/or MXDA, preferably IPDA, and optionally amines with only one primary amine group, with a diepoxide, preferably selected from the list consisting of diglycidyl ethers of bisphenol-A (DGEBA), of bisphenol-F, and of bisphenol-A/F, most preferably diglycidyl ethers of bisphenol-A (DGEBA).

The amount of the at least one latent hardener **B2** is 2 - 8 wt.-%, more preferably 2.5 - 6 wt.-%, most preferably 2.75 - 5 wt.-%, based on the total weight of the epoxy resin **A** having on average more than one epoxide group per molecule.

It was surprisingly found that the mentioned amounts of latent hardener **B2** in combination with the latent hardener **B1** lead to high values of T-peel, lap shear strength and impact peel. This can be seen, for example, in the comparison of the T-peel values and impact peel values of Ref.1 - Ref.3 with E1 - E4 in table 2. Such high values were not found by addition of similar amounts of curing accelerators like aliphatic ureas as shown in the comparison Ref.4 - Ref.6 with E2, E3, E5 and E6 in table 2. On the other hand, using the same amount of adipic acid dihydrazide instead of the latent hardener **B2** resulted in inferior T-peel and impact peel values. This can be seen, for example, in the comparison of Ref.7 with E2 and E6 in table 2.

It is further preferred, if the amount of the at least one latent hardener **B2** is 2.5 - 6 wt.-%, preferably 2.75 - 5 wt.-%, based on the total weight of the epoxy resin **A** having on average more than one epoxide group per molecule.

If the amount of the at least one latent hardener **B2** is less than 2 wt.-%, based on the total weight of the epoxy resin **A** having on average more than one epoxide group per molecule, the adhesive is not fully curing at temperatures around 140 °C for 15 minutes. This can be seen, for example, in the comparison of the T-peel values and IP values of Ref.1 - Ref.3 with E1 - E4 in table 2. Said preferred ranges are further advantageous with respect to higher values T-peel values, especially when curing at 205 °C for 30 min, and IP values, especially when curing at 140 °C for 15 min. This can be seen in the comparison of E4 with E1 - E3 in table 2.

Preferably, the DSC activation temperature of the at least one latent hardener **B2** is between 60 °C - 125 °C, preferably between 70 °C - 115 °C.

It is further preferred if the amine value of the at least one latent hardener **B2** is between 75 - 250 mg KOH/g, preferably between 90 - 200 mg KOH/g.

Preferably, the weight ration of the at least one latent hardener **B1** to the at least one latent hardener **B2 (B1/B2)** is 1 - 3.5, preferably 1.5 - 3.0, more preferably 1.75 - 2.5.

The thermosetting one-component epoxy resin adhesive preferably further comprises at least one accelerator C for epoxy resins.

Such accelerating curing agents are preferably substituted ureas, for example 3-(3-chloro-4-methylphenyl)-1,1-dimethylurea (chlortoluron) or phenyldimethylureas, especially p-chlorophenyl-N,N-dimethylurea (monuron), 3-phenyl-1,1-dimethylurea (fenuron) or 3,4-dichlorophenyl-N,N-dimethylurea (diuron). In addition, it is possible to use compounds from the class of the imidazoles, such as 2-isopropylimidazole or 2-hydroxy-N-(2-(2-(2-hydroxyphenyl)-4,5-dihydroimidazol-1-yl)ethyl)benzamide, imidazolines and trihalide complexes, preferably BF₃ complexes.

Preferably, the accelerator C for epoxy resins is selected from the list consisting of substituted ureas, imidazoles and imidazolines, preferably substituted ureas.

Preferably, the amount of accelerator **C** for epoxy resins is 0.1 - 2 wt.-%, preferably 0.2 - 1.5 wt.-%, more preferably 0.3 - 0.8 wt.-%, based on the total weight of the epoxy resin **A** having on average more than one epoxide group per molecule.

The one-component thermosetting epoxy resin adhesive comprises at least one toughness improver **D.** The toughness improvers **D** may be solid or liquid.

The fraction of toughness improver **D** is from 5 - 40 wt.-%, preferably from 7.5 - 35 wt.-%, 10 - 30 wt.-%, more preferably 15 - 25 wt.-%, based on the total weight of the epoxy resin adhesive.

More particularly the toughness improver **D** is selected from the group consisting of terminally blocked polyurethane polymers **D1,** liquid rubbers **D2** and core-shell polymers **D3.** With preference the toughness improver **D** is selected from the group consisting of terminally blocked polyurethane polymers **D1** and liquid rubbers **D2,** most preferably a terminally blocked polyurethane polymer **D1.**

Where the toughness improver **D** is a terminally blocked polyurethane polymer **D1,** it is preferably a terminally blocked polyurethane prepolymer of the formula (I).

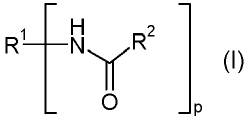

In this formula, R¹ is a p-valent radical of a linear or branched polyurethane prepolymer terminated by isocyanate groups, following the removal of the terminal isocyanate groups, and p has a value of 2 to 8.

Moreover, R² independently at each occurrence is a substituent which is selected from the group consisting of

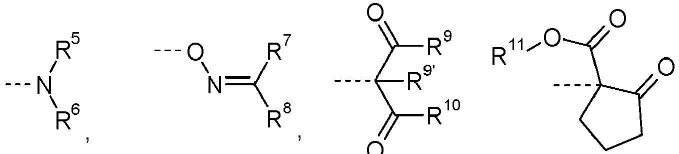

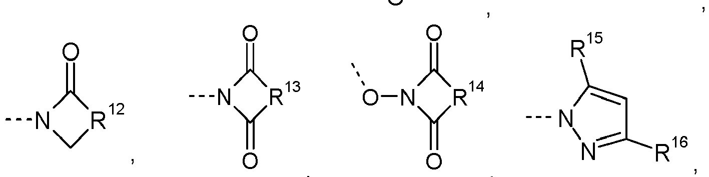

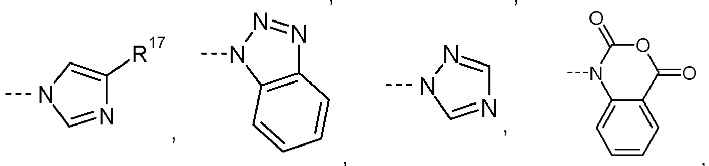

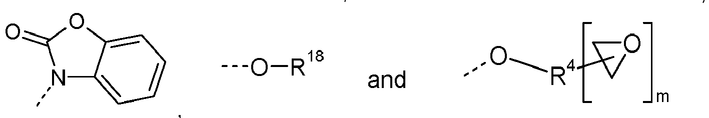

In these formulae, R⁵, R⁶, R⁷ and R⁸ each independently of one another are an alkyl or cycloalkyl or aralkyl or arylalkyl group, or R⁵ together with R⁶, or R⁷ together with R⁸, forms part of a 4- to 7-membered ring which is optionally substituted.

Moreover, R^{9'} and R¹⁰ each independently of one another are an alkyl or aralkyl or arylalkyl group or are an alkyloxy or aryloxy or aralkyloxy group, and R¹¹ is an alkyl group.

R¹², R¹³ and R¹⁴ each independently of one another are an alkylene group having 2 to 5 carbon atoms, which optionally has double bonds or is substituted, or are a phenylene group or are a hydrogenated phenylene group.

R¹⁵, R¹⁶ and R¹⁷ each independently of one another are H or are an alkyl group or are an aryl group or an aralkyl group, and R¹⁸ is an aralkyl group or is a mono- or polycyclic, substituted or unsubstituted aromatic group which optionally has aromatic hydroxyl groups.

Lastly, R⁴ is a radical of an aliphatic, cycloaliphatic, aromatic or araliphatic epoxide containing a primary or secondary hydroxyl group, after the removal of the hydroxyl and epoxide groups, and m has a value of 1, 2 or 3.

R¹⁸ should be considered to comprise, in particular, on the one hand, phenols or polyphenols, more particularly bisphenols, after removal of a hydroxyl group. Preferred examples of such phenols and bisphenols are, in particular, phenol, cresol, resorcinol, pyrocatechol, cardanol (3-pentadecenylphenol (from cashew nut shell oil)), nonylphenol, phenols reacted with styrene or with dicyclopentadiene, bisphenol A, bisphenol F and 2,2'-diallylbisphenol A. R¹⁸ should be considered on the other hand to comprise, in particular, hydroxybenzyl alcohol and benzyl alcohol after removal of a hydroxyl group.

If R⁵, R⁶, R⁷, R⁸, R⁹, R⁹', R¹⁰, R¹¹, R¹⁵, R¹⁶ or R¹⁷ is an alkyl group, this group more particularly is a linear or branched C₁-C₂₀ alkyl group.

If R⁵, R⁶, R⁷, R⁸, R⁹, R^{9'}, R¹⁰, R¹⁵, R¹⁶, R¹⁷ or R¹⁸ is an aralkyl group, this moiety is more particularly an aromatic group bonded via methylene, more particularly a benzyl group.

If R⁵, R⁶, R⁷, R⁸, R⁹, R^{9'} or R¹⁰ is an alkylaryl group, this group is more particularly C₁ to C₂₀ alkyl group bonded via phenylene, such as tolyl or xylyl, for example.

The radicals R² are preferably the substituents of the formulae

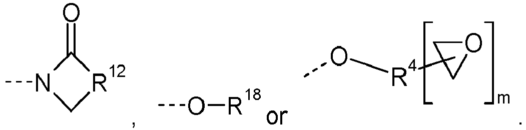

A preferred substituent of the formula 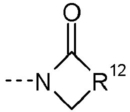 is ε-caprolactam after removal of the NH proton.

Preferred substituents of the formula ---O-R¹⁸ are monophenols or polyphenols, more particularly bisphenols, after removal of a phenolic hydrogen atom. Particularly preferred examples of such radicals R² are radicals which are selected from the group consisting of

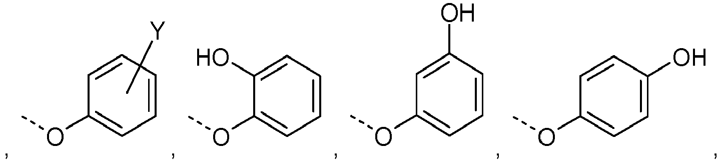

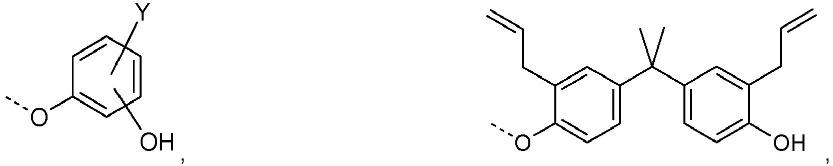

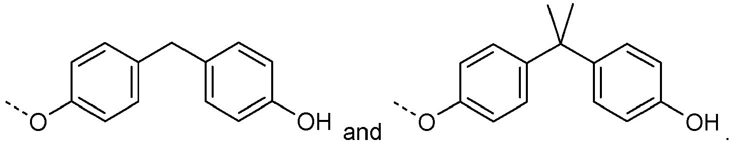

The radical Y in these formulae is a saturated, aromatic or olefinically unsaturated hydrocarbyl radical having 1 to 20 carbon atoms, more particularly having 1 to 15 carbon atoms. Preferred as Y are, in particular, allyl, methyl, nonyl, dodecyl, phenyl, alkyl ether, carboxylic ester or an unsaturated C₁₅ alkyl radical having 1 to 3 double bonds.

Most preferably R² is

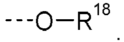

The terminally blocked polyurethane prepolymer of the formula (I) is prepared from the linear or branched polyurethane prepolymer, terminated by isocyanate groups, with one or more isocyanate-reactive compounds R²H. If two or more such isocyanate-reactive compounds are used, the reaction may take place sequentially or with a mixture of these compounds.

The reaction preferably takes place such that the one or more isocyanate-reactive compounds R²H are used stoichiometrically or in a stoichiometric excess, in order to ensure that all of the NCO groups have undergone reaction.

The polyurethane prepolymer having isocyanate end groups on which R¹ is based may be prepared from at least one diisocyanate or triisocyanate and also from a polymer **Q_{PM}** having terminal amino, thiol or hydroxyl groups and/or from an optionally substituted polyphenol **Q_{PP}**.

Suitable diisocyanates are aliphatic, cycloaliphatic, aromatic or araliphatic diisocyanates, especially commercial products such as methylenediphenyl diisocyanate (MDI), hexamethylene diisocyanate (HDI), toluene diisocyanate (TDI), tolidine diisocyanate (TODI), isophorone diisocyanate (IPDI), trimethylhexamethylene diisocyanate (TMDI), 2,5- or 2,6-bis(isocyanatomethyl)bicyclo[2.2.1]heptane, naphthalene 1,5-diisocyanate (NDI), dicyclohexylmethyl diisocyanate (H₁₂MDI), p-phenylene diisocyanate (PPDI), m-tetramethylxylylene diisocyanate (TMXDI), etc., and also their dimers. Preferred are HDI, IPDI, MDI or TDI.

Suitable triisocyanates are trimers or biurets of aliphatic, cycloaliphatic, aromatic or araliphatic diisocyanates, more particularly the isocyanurates and biurets of the diisocyanates described in the preceding paragraph. It is of course also possible to use suitable mixtures of di- or triisocyanates.

Particularly suitable as polymers **Q_{PM}** having terminal amino, thiol or hydroxyl groups are polymers **Q_{PM}** having two or three terminal amino, thiol or hydroxyl groups.

The polymers **Q_{PM}** advantageously have an equivalent weight of 300-6000, more particularly of 600-4000, preferably of 700-2200 g/equivalent of NCO-reactive groups.

Preferred polymers **Q_{PM}** are polyols having average molecular weights of between 600 and 6000 daltons, selected from the group consisting of polyethylene glycols, polypropylene glycols, polyethylene glycol-polypropylene glycol block polymers, polybutylene glycols, hydroxyl-terminated polybutadienes, hydroxyl-terminated butadiene-acrylonitrile copolymers, and mixtures thereof.

Especially preferred as polymers **Q_{PM}** are α,ω-dihydroxypolyalkylene glycols having C₂-C₆ alkylene groups or having mixed C₂-C₆ alkylene groups, which are terminated with amino, thiol or, preferably, hydroxyl groups. Particularly preferred are polypropylene glycols or polybutylene glycols. Further particularly preferred are hydroxyl-group-terminated polyoxybutylenes.

Especially suitable as polyphenol **Q_{PP}** are bis-, tris- and tetraphenols. The term refers not only to pure phenols, but instead also, where appropriate, to substituted phenols. The nature of the substitution can be very diverse. Understood more particularly by this is substitution directly on the aromatic ring system to which the phenolic OH group is bonded. Phenols, moreover, are not only monocyclic aromatics, but also polycyclic or fused aromatic or heteroaromatics, having the phenolic OH group directly on the aromatic or heteroaromatic moiety.

In one preferred embodiment, the polyurethane prepolymer is prepared from at least one diisocyanate or triisocyanate and also from one polymer **Q_{PM}** having terminal amino, thiol or hydroxyl groups. The polyurethane prepolymer is prepared in a manner known to the person skilled in the polyurethane art, more particularly by using the diisocyanate or triisocyanate in a stoichiometric excess in relation to the amino, thiol or hydroxyl groups of the polymer **Q_{PM}**.

The polyurethane prepolymer having isocyanate end groups is preferably elastic in nature. It preferably exhibits a glass transition temperature Tg of less than 0°C.

The toughness improver **D** may be a liquid rubber **D2.** This may be, for example, a carboxyl-terminated or epoxide-terminated polymer.

In a first embodiment, this liquid rubber may be a carboxyl- or epoxide-terminated acrylonitrile/butadiene copolymer or a derivative thereof. Liquid rubbers of this kind are available commercially, for example, under the name Hypro/Hypox^{®} CTBN and CTBNX and ETBN from Emerald Performance Materials. Suitable derivatives are, in particular, elastomer-modified prepolymers containing epoxide groups, of the kind marketed commercially under the product line Polydis^{®}, especially from the product line Polydis^{®} 36.., by the company Struktol^{®} (Schill+Seilacher Group, Germany), or under the product line Albipox (Evonik, Germany).

In a second embodiment, this liquid rubber may be a polyacrylate liquid rubber, which is fully miscible with liquid epoxy resins and which separates only when the epoxy resin matrix is cured, to form microdroplets. Liquid polyacrylate rubbers of this kind are available, for example, under the designation 20208-XPA from Dow.

It is of course also possible to use mixtures of liquid rubbers, more particularly mixtures of carboxyl- or epoxide-terminated acrylonitrile/butadiene copolymers or of derivatives thereof.

The toughness improver **D** in a third embodiment may be a core-shell polymer **D3.** Core-shell polymers consist of an elastic core polymer and a rigid shell polymer. Particularly suitable core-shell polymers are composed of a core of elastic acrylate polymer or butadiene polymer, surrounded by a rigid shell of a rigid thermoplastic polymer. This core-shell structure either forms spontaneously by separation of a block copolymer, or is dictated by the polymerization regime as latex or suspension polymerization with subsequent grafting. Preferred core-shell polymers are those known as MBS polymers, which are available commercially under the trade name Clearstrength^{™} from Arkema, Paraloid^{™} from Dow or F-351^{™} from Zeon.

With particular preference the one-component thermosetting epoxy resin adhesive comprises terminally blocked polyurethane polymers **D1,** most preferably only terminally blocked polyurethane polymers **D1.**

In one preferred embodiment, the one-component thermosetting epoxy resin adhesive further comprises at least one filler **F.** Preference here is given to mica, talc, kaolin, wollastonite, feldspar, syenite, chlorite, bentonite, montmorillonite, calcium carbonate (precipitated or ground), dolomite, quartz, silicas (fumed or precipitated), cristobalite, calcium oxide, aluminium hydroxide, magnesium oxide, hollow ceramic beads, hollow glass beads, hollow organic beads, glass beads, colour pigments. Particularly preferred are fillers selected from the group consisting of wollastonite, calcium carbonate, calcium oxide and fumed silicas.

The total fraction of the overall filler **F** is advantageously 5 - 40 weight-%, preferably 10 - 30 weight-%, 10 - 25 weight-%, most preferably 10 - 20 weight-%, based on the total weight of the epoxy resin adhesive.

The one-component thermosetting epoxy resin adhesive may comprise further constituents, especially stabilizers, particularly heat and/or light stabilizers, plasticizers, solvents, dyes and pigments, corrosion inhibitors, surfactants, defoamers and adhesion promoters.

The one-component thermosetting epoxy resin adhesive preferably has a viscosity of 500 to 5000 Pas at 25°C. Preferably, the viscosity is from 500 to 2000 Pas, 500 to 1500 Pas, preferably 500 to 1300 Pas at 25°C. The viscosity is determined oscillographically by means of a rheometer with heatable plate (MCR 301, AntonPaar) (slot 1000 µm, measuring plate diameter: 25 mm (plate/plate), deformation 0.01 at 5 Hz, temperature: 25°C).

A particularly preferred thermosetting one-component epoxy resin adhesive comprises:
- 40 - 70 wt.-%, preferably 50 - 60 wt.-%, based on the total weight of the one-component thermosetting epoxy resin adhesive, of at least one epoxy resin **A** having on average more than one epoxide group per molecule, preferably a liquid epoxy resin;
- 6 - 8 wt.-%, preferably 6.5 - 7.5 wt.-%, of at least one latent hardener **B1** for epoxy resins, based on the total weight of the epoxy resin **A** having on average more than one epoxide group per molecule;
- 2.5 - 6 wt.-%, preferably 2.75 - 5 wt.-%, of at least one latent hardener **B2** for epoxy resins, wherein the latent hardener **B2** is an epoxy adduct of an aliphatic polyamine having at least one secondary amine group, based on the total weight of the epoxy resin **A** having on average more than one epoxide group per molecule;
- preferably 1 - 3 wt.-%, more preferably 1.25 - 2 wt.-%, based on the total weight of the one-component thermosetting epoxy resin adhesive, of at least one epoxy-bearing reactive diluent **G;**
- preferably 0.2 - 1.5 wt.-%, more preferably 0.3 - 0.8 wt.-%, based on the total weight of the epoxy resin **A** having on average more than one epoxide group per molecule, of at least one accelerator **C** for epoxy resins;
- 7.5 - 35 wt.-%, preferably 15 - 25 wt.-%, based on the total weight of the one-component thermosetting epoxy resin adhesive, of at least one toughness improver **D,** preferably a terminally blocked polyurethane polymers **D1;**
- preferably 5 - 40 weight-%, more preferably 10 - 20 weight-%, based on the total weight of the one-component thermosetting epoxy resin adhesive, of a filler **F** selected from the group consisting of wollastonite, calcium carbonate, calcium oxide and fumed silicas.

Preferably, the thermosetting one-component epoxy resin adhesive has a viscosity of 500 to 2000 Pas, 500 to 1500 Pas, preferably 500 to 1300 Pas at 25°C.

It may further be advantageous if the preferred one-component thermosetting epoxy resin adhesive consists to an extent of more than 80 weight%, preferably more than 90 weight%, more particularly more than 95 weight%, especially preferably more than 98 weight%, most preferably more than 99 weight%, based on the total weight of the epoxy resin adhesive, of the aforementioned constituents.

It is advantageous when the cured one-component thermosetting epoxy resin adhesive of the invention has the following properties:
- T-Peel strength as determined as described in the experimental section: ≥ 8 N/mm, preferably ≥ 9 N/mm, most preferably ≥ 9.75 N/mm, after curing for 15 min at 140 °C; and
- T-Peel strength as determined as described in the experimental section: ≥ 8 N/mm, preferably ≥ 10 N/mm, most preferably ≥ 10.5 N/mm, after curing for 30 min at 205 °C; and
- Lap shear strength determined as described in the experimental section: ≥ 20 MPa, preferably ≥ 22 MPa, most preferably ≥ 25 MPa, after curing for 30 min at 205 °C; and
- Impact-Peel strength as determined as described in the experimental section: ≥ 25 N/mm, preferably ≥ 26.5 N/mm, most preferably ≥ 28 N/mm, after curing for 15 min at 140 °C; and
- Impact-Peel strength as determined as described in the experimental section: ≥ 27.5 N/mm, preferably ≥ 30 N/mm, most preferably ≥ 32.5 N/mm, after curing for 30 min at 205 °C.

Adhesives of this kind are needed for the bonding of heat-stable materials. By heat-stable materials are meant materials which are dimensionally stable, at least during the cure time, at a curing temperature of 100-220°C, preferably 120-200°C. They are, more particularly, metals and plastics such as ABS, polyamide, polyphenylene ethers, compounded materials such as SMC, unsaturated polyesters GRP and composite epoxide or acrylate materials. Particularly heat-stable plastics, furthermore, are polysulfones or polyethersulfones.

A preferred application is when at least one material is a metal.

Considered a particularly preferred use is the adhesive bonding of identical or different metals, particularly in body construction within the automotive industry. The preferred metals are, in particular, steel, especially electrolytically galvanized, hot dip galvanized, oiled steel, Bonazinc-coated steel, and subsequently phosphated steel, and also aluminium, particularly in the versions typically encountered in car making.

Such an adhesive is especially contacted first with the materials to be bonded at a temperature of between 10°C and 80°C, especially between 10°C and 60°C, and later cured at a temperature of typically 130-220°C, preferably 140-180°C, more preferably 150-170°C.

A further aspect of the present invention relates to a method of bonding heat-stable substrates, comprising the steps of:
i) applying a heat-curing epoxy resin composition as described in detail above to the surface of a heat-stable substrate **S1,** especially of a metal;
ii) contacting the heat-curing epoxy resin composition applied with the surface of a further heat-stable substrate **S2,** especially of a metal;
iii) heating the composition to a temperature of 100-220°C, especially of 120-210°C, preferably between 130 and 190°C, 140 and 180°C more preferably between 150 and 170°C.

The substrate **S2** here consists of the same material as or a different material than the substrate **S1**.

The substrates **S1** and/or **S2** are especially the aforementioned metals and plastics.

Preferably, in step iii) heating the composition to a temperature of 100-220°C, especially of 120-210°C, preferably between 130 and 190°C, 140 and 180°C more preferably between 150 and 170°C, the composition is left at the aforementioned temperature for 10 min - 6 h, 10 min - 2 h, 10 min - 60 min, 10 min - 30 min, 10 min - 20 min, more preferably 10 min - 15 min.

Such a method of bonding heat-stable materials results in an adhesive-bonded article. Such an article is preferably a motor vehicle or part of a motor vehicle.

A further aspect of the present invention is therefore an adhesive-bonded article obtained from the aforementioned method. In addition, the compositions of the invention are suitable not just for automobile construction but also for other fields of use. Particular mention should be made of related applications in the transportation sector such as ships, trucks, buses or rail vehicles, or in the construction of consumer goods, for example washing machines.

The materials adhesive-bonded by means of a composition of the invention are used at temperatures between typically 120°C and -40°C, preferably between 100°C and - 40°C, especially between 80°C and -40°C.

One particularly preferred use of the thermosetting epoxy resin adhesive of the invention is the use thereof as a thermosetting body construction adhesive in vehicle construction.

A further particularly preferred use of the thermosetting epoxy resin adhesive of the invention is the use thereof for adhesively bonding metal structures.

A further aspect of the present invention therefore relates to a cured epoxy resin adhesive which is obtained by the heating of a thermosetting epoxy resin adhesive, described in detail above, to a temperature of 100-220°C, preferably 120-210°C.

After passing through a CEC bath, the bodywork enters a CEC oven, where the CEC coating material is baked at a temperature of typically 160 to 190°C. The thermosetting composition reacts here chemically with crosslinking, leading to the curing of the adhesive.

The invention further encompasses the use of a latent hardener **B2,** as described before, for increasing the T-peel strength, determined as described in the experimental section, and the impact peel strength, determined as described in the experimental section, of a one-component thermosetting epoxy resin adhesive, more particularly of a thermosetting epoxy resin adhesive in vehicle construction and sandwich panel construction. This is preferably a thermosetting epoxy resin adhesive as described above. The increase in the impact peel strength and the T-peel strength relates to a comparison with one-component thermosetting epoxy resin adhesives not containing said latent hardener **B2**. The nature and amount of the latent hardener **B2** used is preferably as described above, and in particular the natures and amounts identified above as being preferred are also used with preference.

The invention is elucidated further in the text below by means of examples which, however, are not intended to restrict the invention in any way.

### Examples

Some examples which further illustrate the invention, but which are not intended to restrict the scope of the invention in any way, are cited below.

### Preparation of a toughness improver ("D2")

150 g of poly-THF 2000 (OH number 57 mg/g KOH) and 150 of Liquiflex H (OH number 46 mg/g KOH) were dried under vacuum at 105°C for 30 minutes. Once the temperature had been reduced to 90°C, 61.5 g of IPDI and 0.14 g of dibutyltin dilaurate were added. The reaction was carried out under vacuum at 90°C until the NCO content was constant at 3.10% after 2.0 h (calculated NCO content: 3.15%). Subsequently, 96.1 g of cardanol were added as blocking agent. Stirring was continued at 105°C under vacuum until it was no longer possible to detect any free NCO. The product was used as such as toughness improver ***D1*.**

| | |
|---|---|
| A | Liquid aromatic epoxy resin, D.E.R. 331 (bisphenol A diglycidyl ether), DOW |
| G | Tert-Butylphenyl-glycidylether, Polypox R7, epoxy-bearing reactive diluent |
| B1 | Dicyandiamide, Dyhard 100SF, AlzChem |
| B2-1 | Epoxy adduct of an aliphatic polyamine having at least one secondary amine group, Ancamine 2014FG, amine value: 180 - 190 mg KOH/g, DSC activation temperature: 75 °C, Evonik |
| B2-2 | Reaction product of IPDA with diglycidyl ethers of bisphenol-A (DGEBA), Ancamine 2442, amine value: 95 - 135 mg KOH/g, DSC activation temperature: 112 °C, Evonik |
| ADH | Adipic acid dihydrazide, particle size 3 micron, Technicure ADH-J, ACCI Specialty Materials. |
| C | N,N-dimethylurea, Mw: 88.11 g/mol, Sigma Aldrich |
| F1 | Wollastonite |
| F2 | Pyrogenic silica |
| F3 | Calcium oxide |
| GB | Glass beads |
| PVB | PVB polymer |

| Pigment | Carbon black |
|---|---|
| CPP | Corrosion protection particles (aluminum phosphate) |
| | Poly-THF 2000 (difunctional polybutylene glycol) (OH equivalent weight = about 1000 g/OH equivalent), BASF |
| | PolyBD R45V (hydroxyl-terminated polybutadiene) (OH equivalent weight = about 1230 g/OH equivalent), Cray Valley |
| | Isophorone diisocyanate (= "*IPDI*"), Evonik |

| | |
|---|---|
| Raw materials used. | |

### Production of the compositions

The reference compositions Ref1 - Ref7 and the inventive compositions E1 to E6 were produced according to the compositions in table 1, wherein the stated amounts are in parts by weight. The ratio of the proportion of accelerator **C** in grams per mole of the sum of the epoxy groups of the liquid epoxy resin **A1** and the solid epoxy resin **A2** and the epoxy-bearing reactive diluent **G** is 0.8 - 1.2 g/mol.

### Test methods:

### T-Peel test (T-peel) (ASTM D1876)

The T-peel strength was determined according to ASTM D1876 with 90-degree bend with 0.8 mm-thick 25mm x 100mm high strength hot dip galvanized steel (HDG) coupons, 0.25 mm adhesive bondline thickness, 76.2 mm length overlap, 127 mm/min pull rate. The samples were cured for 15 minutes at metal temperature 140°C (" 140°C/15' "), or respectively were cured for 30 minutes at metal temperature 205°C (" 205°C/30' ")

### Lap shear strength (LSS) (DIN EN 1465)

Cleaned test specimens of Elo H420 steel (thickness 1.5 mm) that had been reoiled with FERROCOTE^{®} 6130 were bonded with the adhesive over a bonding area of 25 x 10 mm with glass beads as spacer in a layer thickness of 0.25 mm. The samples were cured for 15 minutes at metal temperature 140°C (" 140°C/15' "), or respectively were cured for 30 minutes at metal temperature 205°C (" 205°C/30' "). Lap shear strength was determined on a tensile tester at a strain rate of 10 mm/min in a triple determination to DIN EN 1465 at a temperature of 23°C.

### Impact peel strength (IP) (ISO 11343)

The specimens were produced with the adhesive and DC04+ZE steel with dimensions of 90 x 20 x 0.8 mm. The bonding area here was 20 x 30 mm at a layer thickness of 0.25 mm with glass beads as spacer. The samples were cured for 15 minutes at metal temperature 140°C (" 140°C/15' "), or respectively were cured for 30 minutes at metal temperature 205°C (" 205°C/30' ")

The amount of the latent hardener **B1,** based on the total weight of the epoxy resin **A,** is indicated in table 1 as "B1 wt.-% of A". The amount of the latent hardener **B2,** based on the total weight of the epoxy resin **A,** is indicated in table 1 as "B2 wt.-% of A". The weight ration of the latent hardener **B1** to the latent hardener **B2 (B1/B2)** is indicated in table 1 as **"B1/B2".**

**Table 1**

| **Composition** | **Ref.1** | **Ref.2** | **Ref.3** | **E1** | **E2** | **E3** | **E4** | **Ref.4** | **Ref.5** | **Ref.6** | **Ref.7** | **E5** | **E6** |
|---|---|---|---|---|---|---|---|---|---|---|---|---|---|
| D1 | 19.54 | 19.54 | 19.54 | 19.54 | 19.54 | 19.54 | 19.54 | 19.54 | 19.54 | 19.54 | 19.54 | 19.54 | 19.54 |
| A | 53.50 | 53.50 | 53.50 | 53.50 | 53.50 | 53.50 | 53.50 | 53.50 | 53.50 | 53.50 | 53.50 | 53.50 | 53.50 |
| G | 1.35 | 1.35 | 1.35 | 1.35 | 1.35 | 1.35 | 1.35 | 1.35 | 1.35 | 1.35 | 1.35 | 1.35 | 1.35 |
| Pigment | 0.30 | 0.30 | 0.30 | 0.30 | 0.30 | 0.30 | 0.30 | 0.30 | 0.30 | 0.30 | 0.30 | 0.30 | 0.30 |
| CPP | 203 | 203 | 2.03 | 2.03 | 2.03 | 2.03 | 2.03 | 2.03 | 2.03 | 2.03 | 2.03 | 203 | 2.03 |
| B1 | 3.74 | 3.74 | 3.74 | 3.74 | 3.74 | 3.74 | 3.74 | 3.74 | 3.74 | 3.74 | 3.74 | 3.74 | 3.74 |
| F3 | 2.96 | 2.96 | 2.96 | 2.96 | 2.96 | 2.96 | 2.96 | 2.96 | 2.96 | 2.96 | 2.96 | 2.96 | 2.96 |
| F1 | 6.75 | 6.75 | 6.75 | 6.75 | 6.75 | 6.75 | 6.75 | 6.75 | 6.75 | 6.75 | 6.75 | 6.75 | 6.75 |
| F2 | 6.16 | 6.16 | 6.16 | 6.16 | 6.16 | 6.16 | 6.16 | 6.16 | 6.16 | 6.16 | 6.16 | 6.16 | 6.16 |
| GB | 2.43 | 2.43 | 2.43 | 2.43 | 2.43 | 2.43 | 2.43 | 2.43 | 2.43 | 2.43 | 2.43 | 2.43 | 2.43 |
| PVB | 1.00 | 1.00 | 1.00 | 1.00 | 1.00 | 1.00 | 1.00 | 1.00 | 1.00 | 1.00 | 1.00 | 1.00 | 1.00 |
| C | 0.24 | 0.24 | 0.24 | 0.24 | 0.24 | 0.24 | 0.24 | 200 | 300 | 4.00 | 0.24 | 0.24 | 0.24 |
| B2-1 | - | - | - | - | - | - | - | - | - | - | - | 1.7 | 1.9 |
| B2-2 | 0.0 | 0.5 | 1.0 | 1.5 | 2.0 | 2.5 | 3.0 | - | - | - | - | - | - |
| ADH | - | - | - | - | - | - | - | - | - | - | 2.0 | - | - |
| **Total** | **100.00** | **100.5** | **101.0** | **101.5** | **102.0** | **102.5** | **103.0** | **101.8** | **102.8** | **103.8** | **102.0** | **101.7** | **101.9** |
| **B2 wt.-% of A** | 0 | 0.93 | 1.87 | 2.80 | 3.74 | 4.67 | 5.61 | 0 | 0 | 0 | 0 | 3.18 | 3.55 |
| **B1 wt.-% of A** | 7.0 | 7.0 | 7.0 | 7.0 | 7.0 | 7.0 | 7.0 | 7.0 | 7.0 | 7.0 | 7.0 | 7.0 | 7.0 |
| **B1/B2** | - | 7.48 | 3.74 | 2.49 | 1.87 | 1.50 | 1.25 | - | - | - | - | 2.20 | 1.97 |

**Table 2, no cure = composition did not cure**

| Composition | **Ref.1** | **Ref.2** | **Ref.3** | **E1** | **E2** | **E3** | **E4** | **Ref.4** | **Ref.5** | **Ref.6** | **Ref.7** | **E5** | **E6** |
|---|---|---|---|---|---|---|---|---|---|---|---|---|---|
| T-peel, 140°C/15' [N/mm] | no cure | no cure | no cure | 9.99 | 10.92 | 10.27 | 10.12 | 6.6 | 3.95 | 2.97 | 9.51 | 10.12 | 9.36 |
| T-peel, 205°C/30' [N/mm] | 15.47 | 14.14 | 14.07 | 14.16 | 13.45 | 13.24 | 12.35 | 3.56 | 1.46 | 1.24 | 11.15 | 10.63 | 11.15 |
| LSS, [Mpa] | 32.8 | 30.7 | 32 | 33.3 | 26.3 | 29.8 | 30.7 | 16.8 | 16.2 | 11 | 33.3 | 30.6 | 32.1 |
| IP, 140°C/15' [N/mm] | no cure | no cure | 28.01 | 32.12 | 29.18 | 35.22 | 28.28 | 12.28 | 11.34 | no cure | 26.44 | 30.85 | 26.85 |
| IP, 205°C/30' [N/mm] | 42.41 | 44.86 | 36.55 | 43.46 | 38.05 | 34.97 | 36.51 | 8.23 | 1.24 | 7.06 | 25.33 | 41.24 | 38.59 |

## Claims

1. One-component thermosetting epoxy resin adhesive, comprising
a) at least one epoxy resin **A** having on average more than one epoxide group per molecule, preferably a liquid epoxy resin, the fraction of the epoxy resin **A** being from 30 - 80 wt.-%, based on the total weight of the one-component thermosetting epoxy resin adhesive; and
b) at least one latent hardener **B1** for epoxy resins, wherein the latent hardener **B1** is dicyandiamide; and
c) at least one latent hardener **B2** for epoxy resins, wherein the latent hardener **B2** is an epoxy adduct of an aliphatic polyamine having at least one secondary amine group, wherein the amount of the at least one latent hardener **B2** is 2 - 8 wt.-%, more preferably 2.5 - 6 wt.-%, most preferably 2.75 - 5 wt.-%, based on the total weight of the epoxy resin **A** having on average more than one epoxide group per molecule; and
d) preferably at least one accelerator **C** for epoxy resins; and
e) at least at least one toughness improver **D**, the fraction of toughness improver **D** being from 5 - 40 wt.-%, based on the total weight of the one-component thermosetting epoxy resin adhesive;
and the epoxy resin adhesive preferably has a viscosity of 500 to 5000 Pas, 500 to 2000 Pas, 500 to 1500 Pas, preferably 500 to 1300 Pas at 25°C, the viscosity being determined oscillographically by means of a rheometer with heatable plate (MCR 301, AntonPaar) (slot 1000 µm, measuring plate diameter: 25 mm (plate/plate), deformation 0.01 at 5 Hz, temperature: 25°C).

2. One-component thermosetting epoxy resin adhesive according to Claim 1, wherein the at least one latent hardener **B2** is an epoxy adduct of IPDA and/or MXDA, preferably IPDA, and optionally amines with only one primary amine group, with a diepoxide, preferably selected from the list consisting of diglycidyl ethers of bisphenol-A (DGEBA), of bisphenol-F, and of bisphenol-A/F, most preferably diglycidyl ethers of bisphenol-A (DGEBA).

3. One-component thermosetting epoxy resin adhesive according to any of the preceding claims, wherein the amount of the at least one latent hardener **B2** is 2.5 - 6 wt.-%, preferably 2.75 - 5 wt.-%, based on the total weight of the epoxy resin **A** having on average more than one epoxide group per molecule.

4. One-component thermosetting epoxy resin adhesive according to any of the preceding claims, wherein the amount of the at least one latent hardener **B1** is 5 - 20 wt.-%, preferably 6 - 8 wt.-%, more preferably 6.5 - 7.5 wt.-%, based on the total weight of the epoxy resin **A** having on average more than one epoxide group per molecule.

5. One-component thermosetting epoxy resin adhesive according to any of the preceding claims, wherein the weight ration of the at least one latent hardener **B1** to the at least one latent hardener **B2 (B1/B2)** is 1 - 3.5, preferably 1.5 - 3.0, more preferably 1.75 - 2.5.

6. One-component thermosetting epoxy resin adhesive according to any of the preceding claims, wherein the DSC activation temperature of the at least one latent hardener **B2** is between 60 °C - 125 °C, preferably between 70 °C - 115 °C.

7. One-component thermosetting epoxy resin adhesive according to any of the preceding claims, wherein the amine value of the at least one latent hardener **B2** is between 75 - 250 mg KOH/g, preferably between 90 - 200 mg KOH/g.

8. One-component thermosetting epoxy resin adhesive according to any of the preceding claims, wherein the at least one epoxy resin **A** is liquid epoxy resins **A** of the formula (II) (II) 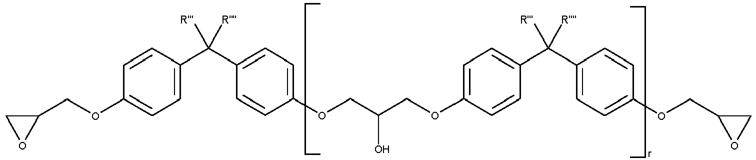 wherin the substituents R‴ and Rʺʺ independently of one another are either H or CH₃, the index r is from 0 to 1, preferably r is less than 0.2.

9. One-component thermosetting epoxy resin adhesive according to any of the preceding claims, wherein the accelerator **C** for epoxy resins is is selected from the list consisting of substituted ureas, imidazoles and imidazolines, preferably substituted ureas, preferably the amount of accelerator **C** for epoxy resins is 0.1 - 2 wt.-%, preferably 0.2 - 1.5 wt.-%, more preferably 0.3 - 0.8 wt.-%, based on the total weight of the epoxy resin **A** having on average more than one epoxide group per molecule.

10. One-component thermosetting epoxy resin adhesive according to any of the preceding claims, further comprising at least one epoxy-bearing reactive diluent **G,** preferably, the fraction of the epoxy-bearing reactive diluent **G** is from 0.5-10 wt.-%, preferably 0.75 - 5 wt.-%, more preferably 1 - 3 wt.-%, most preferably 1.25 - 2 wt.-%, based on the total weight of the one-component thermosetting epoxy resin adhesive.

11. One-component thermosetting epoxy resin adhesive according to any of the preceding claims, further comprising at least one filler **F**, preferably, the fraction of at least one filler **F** is from 5 - 40 weight-%, based on the total weight of the one-component thermosetting epoxy resin adhesive.

12. One-component thermosetting epoxy resin adhesive according to any of the preceding claims, wherein the toughness improver **D** is selected from the group consisting of terminally blocked polyurethane polymers **D1,** liquid rubbers **D2** and core-shell polymers **D3,** preferably a terminally blocked polyurethane polymers **D1.**

13. Method for adhesively bonding heat-stable substrates, comprising the steps of
i) applying a thermosetting epoxy resin adhesive according to any of claims 1 to 12 to the surface of a heat-stable substrate **S1,** more particularly of a metal;
ii) contacting the applied thermosetting epoxy resin adhesive with the surface of a further heat-stable substrate **S2,** more particularly of a metal;
iii) heating the thermosetting epoxy resin adhesive to a temperature of 100-220°C, more particularly 120-210°C, preferably between 130 and 190°C, 140 and 180°C more preferably between 150 and 170°C;
wherein the substrate **S2** consists of the same material as or a different material to the substrate **S1**.

14. Method according to claim 13, wherein step iii) heating the composition to a temperature of 100-220°C, especially of 120-210°C, preferably between 130 and 190°C, 140 and 180°C more preferably between 150 and 170°C, the composition is left at the aforementioned temperature for 10 min - 6 h, 10 min - 2 h, 10 min - 60 min, 10 min - 30 min, 10 min - 20 min, more preferably 10 min - 15 min.

15. Method of using of a thermosetting epoxy resin adhesive according to any of claims 1 to 12 for adhesively bonding or strengthening metal structures or for strengthening filling of cavities in vehicle construction or sandwich panel construction.

16. Use of a latent hardener **B2,** as described as latent hardener **B2** in any of claim 1 - 12, for increasing the T-peel strength determined as described in the specification and the impact peel strength determined as described in the specification of a one-component thermosetting epoxy resin adhesive, more particularly of a thermosetting epoxy resin adhesive in vehicle construction and sandwich panel construction, more preferably of a one-component thermosetting epoxy resin adhesive according to any of claims 1 - 12.
